# EUROPÄISCHE PATENTSCHRIFT

(11) **EP 3 317 148 B1**
(45) Veröffentlichungstag und Bekanntmachung des Hinweises auf die Patenterteilung: **07.08.2019**
(21) Anmeldenummer: 16732564.6
(22) Anmeldetag: 21.06.2016
(51) Int. Cl.: B60R 13/08

(54) **VERFAHREN ZUM HERSTELLEN EINES ABSCHIRMTEILS AUFWEISEND ZUMINDEST EINE METALLISCHE ABSCHIRMLAGE UND EINE TEXTILE DÄMMLAGE SOWIE EIN ABSCHIRMTEIL**
METHOD FOR MANUFACTURING A SHIELDING PART COMPRISING AT LEAST ONE METAL SHIELDING LAYER AND A TEXTILE INSULATING LAYER, AND SHIELDING PART
PROCÉDÉ DE FABRICATION D'UN ÉLÉMENT DE PROTECTION POURVU AU MOINS D'UNE COUCHE DE PROTECTION MÉTALLIQUE ET D'UNE COUCHE ISOLANTE TEXTILE ET ÉLÉMENT DE PROTECTION

(30) Priorität: 03.07.2015 DE 102015110791
(43) Veröffentlichungstag der Anmeldung: 09.05.2018
(73) Patentinhaber: ElringKlinger AG, 72581 Dettingen/Erms (DE)
(72) Erfinder: SCHÖNEFELD, Arne, 9113 Degersheim (CH); KOCH, Silvio, 9476 Weite (CH)
(74) Vertreter: Oberdorfer, Jürgen
(86) Internationale Anmeldenummer: PCT/EP2016/064235
(87) Internationale Veröffentlichungsnummer: WO 2017/005481

(56) Entgegenhaltungen:
- EP-B1- 1 861 290
- DE-A1-102010 035 431
- DE-B3- 10 247 641

## Beschreibung

Die Erfindung betrifft ein Verfahren zum Herstellen eines Abschirmteils aufweisend zumindest eine metallische Abschirmlage und eine textile Dämmlage sowie ein Abschirmteil, insbesondere hergestellt nach dem erfindungsgemäßen Verfahren.

Insbesondere bei textilen Unterbodenverkleidungen im Kraftfahrzeugbau sind aus dem Stand der Technik Abschirmteile bekannt, die eine metallische Abschirmlage und eine textile Dämmlage, die auch als Trägerlage fungieren kann, besitzen. Diese beiden Lagen sind nach dem Stand der Technik entweder flächig verklebt oder mittels einer Vielzahl von Blindnieten oder Tackernägeln miteinander punktuell verbunden.

Bei dünnen metallischen Abschirmlagen, beispielsweise bei Edelstahlblechen unterhalb von 0,15 mm kann eine Verklebung der textilen Lage mit der Abschirmlage im unverformten, d. h. üblicherweise im ebenen Zustand erfolgen und dieser Verbund anschließend mittels Umformung in seine endgültige dreidimensionale Raumform verbracht werden. Bei einer Blechstärke der Abschirmlage von 0,2 mm und mehr funktioniert diese Methode nicht mehr oder sehr eingeschränkt.

Üblicherweise werden derartige Verbindungen zwischen solchen dickeren, metallischen Lagen und der textilen Dämmlage mittels Blindnieten hergestellt. Dabei wird vor einem Umformprozess oder während des Umformprozesses die Blechlage und die Dämmlage oder Trägerlage gelocht. Nach der Umformung wird die textile Dämmlage/Trägerlage mittels Blindnieten durch die Löcher der metallischen Abschirmlage hindurch verbunden. Ein derartiges Herstellverfahren ist aufwändig und kostenintensiv, da zumindest ein Lochungswerkzeug notwendig ist, welches die Lochung herstellt. Aus der DE 10 2010 035431 A1 ist ein Abschirmteil mit einer Nietverbindung bekannt geworden.

Aufgabe der Erfindung ist es, ein Verfahren zum Herstellen eines Abschirmteils aufweisend zumindest eine metallische Abschirmlage und eine textile Dämmlage, die auch als Trägerlage fungieren kann, anzugeben, welches kostengünstig und einfach durchführbar ist und zudem die Verwendung von metallischen Abschirmlagen von mehr als 0,2 mm Materialdicke erlaubt, wobei diese insbesondere aus Edelstahl ausgebildet sein sollen.

Diese Aufgaben werden mit einem Verfahren mit den Merkmalen des Anspruchs 1 gelöst. Vorteilhafte Ausführungsformen sind in den Unteransprüchen angegeben.

Eine weitere Aufgabe der Erfindung ist es, ein Abschirmteil anzugeben, welches einfach und kostengünstig herstellbar ist.

Diese Aufgabe wird mit einem Abschirmteil mit den Merkmalen des Anspruchs 12 gelöst. Vorteilhafte Ausführungsformen sind in den vom Anspruch 12 abhängigen Unteransprüchen angeben.

Entgegen der Vorurteile in der Fachwelt wurde erfindungsgemäß erkannt, dass eine textile Dämmlage, die auch als formstabile Trägerlage ausgebildet sein kann, gut mit einer metallischen Abschirmlage mittels des Fügeverfahrens des Stanznietens verbindbar ist. Die Aufgabe wird daher dadurch gelöst, dass zunächst eine metallische Abschirmlage und eine textile Dämmlage oder Trägerlage bereitgestellt wird und die textile Dämmlage oder die textile Trägerlage mit der Abschirmlage durch mindestens eine Stanznietverbindung verbunden wird.

Das erfindungsgemäße Verfahren kann einerseits derart durchgeführt werden, dass das Verbinden der textilen Dämmlage mit der Abschirmlage durch mindestens eine Stanznietverbindung in einem unverformten oder nur teilweise, z. B. vorverformten Zustand der Abschirmlage und der Dämmlage erfolgt und der Verbund anschließend im Wege eines Umformverfahrens in einem Umformwerkzeug zu seiner dreidimensionalen Endraumform umgeformt wird.

Erfindungsgemäss ist aus der textilen Dämmlage in einem Warmumformverfahren ein dreidimensionales Formteil herzustellen, welches insbesondere eigenformstabil ist und als Trägerteil fungieren kann. Mit diesem dreidimensional geformten Formteil wird eine korrespondierende dreidimensional umgeformte metallische Abschirmlage durch Stanznieten verbunden.

Zweckmäßiger Weise wird zur Herstellung der Stanznietverbindung zumindest ein Niet von einer Seite der textilen Dämmlage her eingeschossen, so dass der Niet in der metallischen Abschirmlage einen Bördel bildet und dort insbesondere formschlüssig gehalten ist.

In einer weiteren Ausführungsform kann die metallische Abschirmlage, die ein Edelstahl-, Stahl- oder Aluminiumblech sein, welches z. B. eine Materialdicke zwischen 0,2 mm und 0,7 mm, insbesondere zwischen 0,2 mm und 0,4 mm besitzt.

Es können als metallische Abschirmlage sowohl ein glattes als auch ein genopptes Metallblech verwendet werden.

Als textile Dämmlage hat sich ein LWRT-Vlies, insbesondere aus einer Mischung aus thermoplastischen Fasern und Glasfasern bewährt. LWRT-Werkstoffe basieren auf einem Vliesmaterial und sind ein Mix aus Glasfasern mit thermoplastischen Fasern aus Polypropylen oder Polyurethan. LWRT-Werkstoffe (Light Weight Reinforced Thermoplastics) können als solche auch mehrschichtig, beispielsweise mit einem Glasfaserkern und diesen umgebenden Thermoplastfaserlagen ausgebildet sein.

Gemäß einer zweckmäßigen Weiterbildung des erfindungsgemäßen Verfahrens wird ein Stanzniet zum Durchführen des Verfahrens verwendet, welcher einen Kopfdurchmesser von mehr als dem Doppelten des Schaftdurchmessers besitzt, insbesondere mehr als das 2,5-Fache des Schaftsdurchmessers hat. Hierdurch werden insbesondere hohe Auszugskräfte erreicht.

Wird der Verbund aus der textilen Dämmlage und der metallischen Abschirmlage in einem unverformten, z. B. ebenen oder in einem teilweise vorgeformten Zustand erzeugt, so ist es zweckmäßig, dass zum Umformen der Verbund in ein Umformwerkzeug eingelegt wird, welches Ausnehmungen zur Aufnahme des zumindest einen Nietkopfs oder des zumindest einen Bördels der Stanznietverbindung aufweist.

Das erfindungsgemäße Verfahren ermöglicht es vorteilhafter Weise, den Verbund aus metallischer Abschirmlage und textiler Dämmlage klebstofffrei umzuformen und insbesondere klebstofffrei herzustellen. Es hat sich überraschender Weise gezeigt, dass alleine die Stanznietverbindung, bei der der Stanzniet die textile Dämmlage/Trägerlage durchdringt, sowohl eine statische wie auch dynamische Festigkeit in ausreichender Höhe bietet.

Erfindungsgemäß wurde ebenfalls erkannt, dass ein Abschirmteil besonders kostengünstig und hinsichtlich der Festigkeitsanforderungen in besonderem Maße ausreichend ist, wenn zumindest eine metallische Abschirmlage mit einer textilen Dämmlage durch eine Stanznietverbindung, einen Verbund bildend, verbunden ist. Überraschender Weise hat sich gezeigt, dass ein solcher Verbund klebstofffrei und frei von anderen Verbindungs- oder Fügemitteln mit den gewünschten Eigenschaften herstellbar ist.

Ein erfindungsgemäßes Abschirmteil kann zweckmäßiger Weise dadurch weitergebildet werden, dass die textile Dämmlage ein LWRT-Vlies ist und gegebenenfalls eine eigenformstabile, d. h. selbsttragende Raumform aufweist. Dies ermöglicht es, insbesondere metallische Abschirmlagen nur partiell aufzubringen, an Stellen, die besonderen thermischen Belastungen ausgesetzt sind.

Für solche Abschirmlagen kann ein Edelstahl- oder Stahl- oder Aluminiumblech verwendet werden, welches eine Materialstärke von 0,2 mm bis 0,7 mm, insbesondere zwischen 0,2 mm und 0,4 mm aufweist. Überraschender Weise hat sich gezeigt, dass ein Verbund aus derart dünnen metallischen Abschirmlagen und der textilen Dämmlage mittels Stanznieten in ausreichendem Maße fest und widerstandsfähig ist. Üblicherweise wird in der Fachwelt wegen der plastischen Umformung beim Stanznieten, insbesondere zur Ausbildung eines ausreichend festen Verbundes das Stanznietverfahren für metallische Blechdicken von 0,75 mm und mehr empfohlen. Für den Fachmann war es daher überraschend, für den Anwendungsfall eines Abschirmteiles metallische Abschirmlagen mit deutlich dünnerer Blechdicke zuverlässig im Wege des Stanznietens mit einer textilen Trägerlage verbinden zu können.

Zweckmäßiger Weise ist ein Stanznietkopf einer Stanzniet auf der Seite der textilen Dämmlage angeordnet und ein Bördel der Stanznietverbindung gegenüberliegend auf der Seite der metallischen Abschirmlage des Verbundes angeordnet. Wird ein entsprechend groß dimensionierter Stanznietkopf verwendet, insbesondere mit einem Stanznietkopfdurchmesser von mehr als dem Doppelten des Schaftdurchmessers, besonders bevorzugt mit einem Stanznietkopfdurchmesser von mehr als dem 2,5-fachen des Schaftdurchmessers, so können hohe Ausknöpfkräfte und somit eine hohe Festigkeit der Stanznietverbindung zwischen der Dämmlage und der Abschirmlage erreicht werden.

Im Folgenden wird die Erfindung anhand der Zeichnung beispielhaft näher erläutert. Es zeigen:
- Figur 1:: eine perspektivische Ansicht auf eine Ausführungsform eines erfindungsgemäßen Abschirmteils in stark schematisierter Darstellung;
- Figur 2:: einen Querschnitt durch eine Stanznietverbindung eines erfindungsgemäßen Abschirmteils.

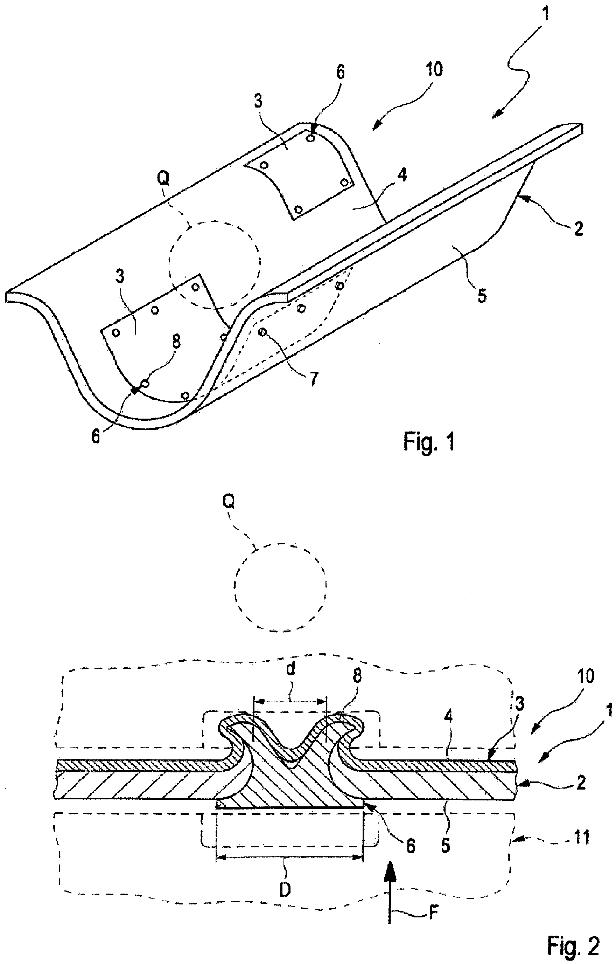

Eine Ausführungsform des erfindungsgemäßen Abschirmteils 1 zeigt Figur 1 in stark schematisierter Darstellung. Das Abschirmteil 1 besitzt eine textile Dämmlage 2 und zumindest eine metallische Abschirmlage 3. Die textile Dämmlage 2 besitzt eine zu einer Wärmequelle Q hingewandte erste Seite 4 und beispielsweise eine von der Wärmequelle Q abgewandte zweite Seite 5. Auf der der Wärmequelle Q zugewandten ersten Seite 4 sind zumindest bereichsweise die metallischen Abschirmlagen 3 befestigt, wobei zur Befestigung Stanznieten 6 vorgesehen sind.

Die Stanznieten 6 sind von der zweiten Seite 5 aus durch die Dämmlage 2 hindurch in die metallische Abschirmlage 3 eingetrieben. Hierdurch liegt ein Stanznietkopf 7 auf der textilen Dämmlage 2 auf. Gegenüberliegend zum Stanznietkopf 7 bildet eine Stanznietung einen Bördel 8, der sich als Unebenheit in der metallischen Abschirmlage 3 wiederspiegelt.

Die metallische Abschirmlage 3 kann ein Edelstahl-, Stahl- oder Aluminiumblech oder ein Verbundwerkstoff sein. Die textile Dämmlage 2 kann beispielsweise ein vorgeformtes eigenformstabiles LWRT-Vlies sein, welches als solches ein oder mehrschichtig aufgebaut sein kann. Beim Setzen der Stanznieten 6 wird die textile Dämmlage 2 gelocht. Ein für das Stanznieten typischer Butzen der durchschossenen Schicht (hier die textile Dämmlage 2) verbleibt in einem Hohlraum, beispielsweise einer Halbhohlstanzniet. Nach dem Verbinden der metallischen Abschirmlage 3 und der textilen Dämmlage 2 ist somit ein Verbund 10 gebildet. Die metallische Abschirmlagen 3 sind bevorzugt einer Hitze- oder Wärmequelle Q zugewandt, insbesondere diese nicht berührend zugewandt angeordnet.

Stark schematisiert ist ein Querschnitt durch eine Stanznietverbindung eines erfindungsgemäßen Abschirmteils 1 in Figur 2 gezeigt. Die textile Dämmlage 2 ist dabei in Figur 2 als die untere Schicht dargestellt. Die zweite Seite 5 ist eine freie Oberseite der textilen Dämmlage 2. Die metallische Abschirmlage 3 ist in Figur 2 vertikal oben gezeigt. Deren erste Seite 4 ist eine freie Oberseite. Ein Stanzniet 6 ist entlang einer Fügerichtung F von der zweiten Seite 5 her, die textile Dämmlage 2 durchdringend, in die metallische Abschirmlage 3 eindringend eingetrieben. Der Bördel 8 bildet sich auf der freien Oberseite (erste Seite 4 der metallischen Abschirmlage 3). Die Wärmequelle Q ist schematisch in Figur 2 dargestellt. Dieser Wärmequelle Q ist die metallische Abschirmlage 3 beabstandet zugewandt.

Von besonderem Vorteil beim erfindungsgemäßen Verfahren und beim erfindungsgemäßen Abschirmteil ist, dass zum Fügen der Abschirmlage 3 auf die Dämmlage 2 keine Vorlochung der Lagen stattfinden muss und die Lochbilder übereinander gebracht werden müssen, wie dies bei einem Blindneitvorgang der Fall ist.

Mit dem erfindungsgemäßen Abschirmteil und dem erfindungsgemäßen Verfahren ist es auch möglich, kompliziertere dreidimensionale Geometrien beider Lagen herzustellen und zu fügen. Beispielsweise ist dies bei einer klebtechnischen Fügung der Lagen nicht so einfach möglich, da eine Klebung ein bestimmtes maximales Spaltmaß vorsieht und dies toleranzmäßig nicht immer einfach erreichbar ist. Es hat sich sogar gezeigt, dass ein im ebenen oder schwach vorgeformten Zustand gefügter Verbund (vgl. Figur 2) in einem geeignetem Umformwerkzeug (schematisch mit dem Bezugszeichen 11 angezogen) umgeformt werden kann, wobei das Umformwerkzeug 11 Ausnehmungen 12 besitzt, in dem man während des Umformvorganges ein gegebenenfalls überstehender Stanznietkopf 7 oder der Bördel 8 einbringen kann. In diesem Fall ist es sogar möglich, die Dämmlage 2 und die Abschirmlage 3 vor dem Umformen zu fügen und im gefügten Zustand umzuformen.

Ein Stanznietkopfdurchmesser D ist insbesondere mehr als doppelt so groß, besonders bevorzugt mehr als 2,5-mal so groß als ein Schaftdurchmesser d eines Nietschaftes im unverformten Zustand.

### Bezugszeichen

- 1: Abschirmteil
- 2: Dämmlage
- 3: Abschirmlage
- 4: erste Seite
- 5: zweite Seite
- 6: Stanznieten
- 7: Stanznietkopf
- 8: Bördel
- 10: Verbund
- 11: Umformwerkzeug
- 12: Ausnehmungen

- F: Fügerichtung
- D: Stanznietkopfdurchmesser
- d: Schaftdurchmesser

## Patentansprüche

1. Verfahren zum Herstellen eines Abschirmteils (1) aufweisend zumindest eine metallische Abschirmlage (3) und eine textile Dämmlage (2) zumindest mit den Schritten:
a) Bereitstellen einer metallischen Abschirmlage (3) und einer textilen Dämmlage (2);
b) Verbinden der textilen Dämmlage (2) mit der Abschirmlage (3) durch mindestens eine Nietverbindung, **dadurch gekennzeichnet, dass** die Nietverbindung eine Stanznietverbindung ist und dass das Verbinden der textilen Dämmlage (2) mit der Abschirmlage (3) durch die mindestens eine Stanznietverbindung in einem unverformten oder nur teilweise vorverformten Zustand der Abschirmlage (3) und der Dämmlage (2) erfolgt und anschließend ein dreidimensionales Umformen des Verbundes (10) aus der textilen Dämmlage (2) und der Abschirmlage (3) in einem Umformwerkzeug (11) erfolgt oder aus der textilen Dämmlage (2) in einem Warmumformverfahren ein dreidimensionales Formteil hergestellt wird, welches mit einer korrespondierenden dreidimensional umgeformten metallischen Abschirmlage (3) durch Stanznieten (6) zu einem Verbund (10) weitergebildet wird.

2. Verfahren nach Anspruch 1, **dadurch gekennzeichnet, dass** zur Herstellung der Stanznietverbindung zumindest ein Stanzniet (6) von einer Seite (4) der textilen Dämmlage (2) her eingeschossen wird.

3. Verfahren nach Anspruch 1 oder 2, **dadurch gekennzeichnet, dass** als metallische Abschirmlage (3) ein Edelstahl- oder Stahl- oder Aluminiumblech verwendet wird.

4. Verfahren nach einem der vorangegangenen Ansprüche, **dadurch gekennzeichnet, dass** als Abschirmlage (3) ein glattes oder genopptes Metallblech verwendet wird oder die Materialdicke der Abschirmlage (3) zwischen 0,2 mm und 0,7 mm, insbesondere zwischen 0,2 mm und 0,4 mm liegt.

5. Verfahren nach einem der vorangegangenen Ansprüche, **dadurch gekennzeichnet, dass** als textile Dämmlage (2) ein LWRT-Vlies, insbesondere aus einer Mischung aus thermoplastischen Fasern und Glasfasern verwendet wird.

6. Verfahren nach einem der vorangegangenen Ansprüche, **dadurch gekennzeichnet, dass** der zumindest eine Stanzniet (6) zum Durchführen des Verfahrens einen Stanznietkopfdurchmesser (D) von mehr als dem Doppelten eines Schaftdurchmessers (d) besitzt, insbesondere mehr als das 2,5-Fache des Schaftdurchmessers (d) besitzt.

7. Verfahren nach einem der vorangegangenen Ansprüche, **dadurch gekennzeichnet, dass** vor dem Umformen der Verbund (10) in ein Umformwerkzeug (11) eingelegt wird, welches Ausnehmungen zur Aufnahme des zumindest einen Stanznietkopfes (7) und/oder des zumindest einen Bördels (8) der Stanznietverbindung aufweist.

8. Verfahren nach einem der vorangegangenen Ansprüche, **dadurch gekennzeichnet, dass** der Verbund klebstofffrei umgeformt oder klebstofffrei hergestellt wird.

9. Abschirmteil hergestellt nach einem Verfahren gemäß den Ansprüchen 1 bis 8, mit zumindest einer metallischen Abschirmlage (3) und einer textilen Dämmlage (2), **dadurch gekennzeichnet, dass** die textile Dämmlage (2) mit der Abschirmlage (3) durch mindestens eine Stanznietverbindung einen Verbund (10) bildend verbunden ist.

10. Abschirmteil nach Anspruch 9, **dadurch gekennzeichnet, dass** die textile Dämmlage (2) ein LWRT-Vlies aus einer Mischung aus thermoplastischen Fasern und Glasfasern ist.

11. Abschirmteil nach einem der Ansprüche 9 oder 10, **dadurch gekennzeichnet, dass** die Abschirmlage (3) ein Edelstahl- oder ein Stahl- oder Aluminiumblech ist, welches eine Materialdicke zwischen 0,2 mm und 0,7 mm, insbesondere zwischen 0,2 mm und 0,4 mm aufweist.

12. Abschirmteil nach einem der Ansprüche 9 oder 11, **dadurch gekennzeichnet, dass** ein Stanznietkopf einer Stanzniet (6) auf einer zweiten Seite (5) der textilen Dämmlage (2) angeordnet ist und ein Bördel (8) der Stanznietverbindung auf einer ersten Seite (4) der metallischen Abschirmlage (3) des Verbundes (10) angeordnet ist.

13. Abschirmteil nach einem der Ansprüche 9 oder 12, **dadurch gekennzeichnet, dass** der zumindest eine Stanzniet (6) einen Stanznietkopfdurchmesser (D) von mehr als dem Doppelten des Schaftdurchmessers (d) besitzt, insbesondere mehr als das 2,5-Fache des Schaftdurchmessers (d) besitzt.

14. Abschirmteil nach einem der Ansprüche 9 oder 13, **dadurch gekennzeichnet, dass** die textile Dämmlage eine mehrschichtige Lage mit einer Glasfaserschicht und thermoaktivierbaren PP- oder PU-Fasern ist oder die textile Dämmlage ein selbsttragendes, insbesondere eigenformsteifes Formteil ist, an welchem zumindest eine Abschirmlage lediglich bereichsweise angebracht ist.

## Claims

1. A method for manufacturing a shielding part (1) comprising at least one metal shielding layer (3) and a textile insulating layer (2), said method comprising at least the steps:
a) providing a metal shielding layer (3) and a textile insulating layer (2); and
b) joining the textile insulating layer (2) to the shielding layer (3) using at least one rivet connection, **characterized in that** the rivet connection is a punch rivet connection and the connection of the textile insulating layer (2) to the shielding layer (3) is carried out by means of the at least one punch rivet connection in a non-deformed or only partially deformed state of the shielding layer (3) and insulating layer (2) and then a three-dimensional forming of the composite (10) of the textile insulating layer (2) and shielding layer (3) takes place in a forming tool (11) or a three-dimensional formed part is produced from the textile insulating layer (2) in a hot-forming process, which part is transformed into a composite (10) by being punch riveted (6) to a corresponding three-dimensionally formed metallic shielding layer (3).

2. The method according to claim 1, **characterized in that** in order to produce the punch rivet connection, at least one punch rivet (6) is fired in from one side (4) of the textile insulating layer (2).

3. The method according to claim 1 or 2, **characterized in that** a stainless steel or steel or aluminum sheet is used as the metallic shielding layer (3).

4. The method according to one of the preceding claims, **characterized in that** a smooth or nubby metal sheet is used as the shielding layer (3) or the material thickness of the shielding layer (3) is between 0.2 mm and 0.7 mm, in particular between 0.2 mm and 0.4 mm.

5. The method according to one of the preceding claims, **characterized in that** an LWRT nonwoven, particularly composed of a mixture of thermoplastic fibers and glass fibers, is used as the textile insulating layer (2).

6. The method according to one of the preceding claims, **characterized in that** the at least one punch rivet (6) for performing the method has a punch rivet head diameter (D) that is more than twice the shaft diameter (d), in particular more than 2.5 times the shaft diameter (d).

7. The method according to one of the preceding claims, **characterized in that** before the forming, the composite (10) is inserted into a forming tool (11) that has recesses for accommodating the at least one punch rivet head (7) and/or the at least one flange (8) of the punch rivet connection.

8. The method according to one of the preceding claims, **characterized in that** the composite is formed without adhesive or is produced without adhesive.

9. A shielding part produced using the method according to claims 1 through 8, having at least one metallic shielding layer (3) and one textile insulating layer (2), **characterized in that** the textile insulating layer (2) is connected to the shielding layer (3) by means of at least one punch rivet connection, forming a composite (10).

10. The shielding part according to claim 9, **characterized in that** the textile insulating layer (2) is an LWRT nonwoven composed of a mixture of thermoplastic fibers and glass fibers.

11. The shielding part according to one of claims 9 or 10, **characterized in that** the shielding layer (3) is a stainless steel or steel or aluminum sheet, which has a material thickness of between 0.2 mm and 0.7 mm, in particular between 0.2 mm and 0.4 mm.

12. The shielding part according to one of claims 9 or 11, **characterized in that** a punch rivet head of a punch rivet (6) is positioned on a second side (5) of the textile insulating layer (2) and a flange (8) of the punch rivet connection is positioned on a first side (4) of the metallic shielding layer (3) of the composite (10).

13. The shielding part according to one of claims 9 or 12, **characterized in that** the at least one punch rivet (6) has a punch rivet head diameter (D) that is more than twice the shaft diameter (d), in particular more than 2.5 times the shaft diameter (d).

14. The shielding part according to one of claims 9 or 13, **characterized in that** the textile insulating layer is a multi-layered laid structure with a glass fiber layer and thermally activatable PP or PU fibers or the textile insulating layer is a self-supporting - in particular inherently dimensionally rigid - formed part to which at least one shielding layer is mounted in only some areas.

## Revendications

1. Procédé de fabrication d'un élément de protection (1) comportant au moins une couche de protection métallique (3) et une couche isolante textile (2), comprenant au moins les étapes consistant à :
a) fournir une couche de protection métallique (3) et une couche isolante textile (2) ;
b) assembler la couche isolante textile (2) avec la couche de protection (3) par au moins une liaison de rivetage,
**caractérisé en ce que**
la liaison de rivetage est une liaison de rivetage-poinçonnage, et **en ce que** l'assemblage de la couche isolante textile (2) avec la couche de protection (3) par ladite au moins une liaison de rivetage-poinçonnage s'effectue dans un état non déformé ou seulement partiellement pré-déformé de la couche de protection (3) et de la couche isolante (2), et ensuite s'effectue un formage tridimensionnel du composite (10) constitué de la couche isolante textile (2) et de la couche de protection (3) dans un outil de formage (11), ou une pièce formée tridimensionnelle est réalisée à partir de la couche isolante textile (2) par un procédé de formage à chaud, pièce qui est alors assemblée avec une couche de protection métallique (3) correspondante formée en trois dimensions par des rivets poinçonnant (6) pour donner un composite (10).

2. Procédé selon la revendication 1, **caractérisé en ce qu'**en vue de réaliser la liaison de rivetage-poinçonnage, au moins un rivet poinçonnant (6) est injecté depuis une face (4) de la couche isolante textile (2).

3. Procédé selon la revendication 1 ou 2, **caractérisé en ce qu'**une tôle en acier inoxydable ou en acier ou en aluminium est utilisée à titre de couche de protection métallique (3).

4. Procédé selon l'une des revendications précédentes, **caractérisé en ce qu'**une tôle métallique lisse ou nopée est utilisée à titre de couche de protection (3), ou l'épaisseur du matériau de la couche de protection (3) est comprise entre 0,2 mm et 0,7 mm, en particulier entre 0,2 mm et 0,4 mm.

5. Procédé selon l'une des revendications précédentes, **caractérisé en ce qu'**un non-tissé LWRT (lightweight reinforced thermoplastics), constitué en particulier d'un mélange de fibres thermoplastiques et de fibres de verre, est utilisé à titre de couche isolante textile (2).

6. Procédé selon l'une des revendications précédentes, **caractérisé en ce que** ledit au moins un rivet poinçonnant (6) destiné à mettre en oeuvre le procédé possède un diamètre (D) de tête de rivet poinçonnant qui est supérieur au double d'un diamètre de tige (d), en particulier supérieur à 2,5 fois le diamètre de tige (d).

7. Procédé selon l'une des revendications précédentes, **caractérisé en ce qu'**avant le formage, le composite (10) est posé dans un outil de formage (11) qui présente des évidements pour loger ladite au moins une tête de rivet poinçonnant (7) et/ou au moins un repli (8) de la liaison de rivetage-poinçonnage.

8. Procédé selon l'une des revendications précédentes, **caractérisé en ce que** le composite est formé sans adhésif ou réalisé sans adhésif.

9. Élément de protection fabriqué par un procédé selon l'une des revendications 1 à 8, comportant au moins une couche de protection métallique (3) et une couche isolante textile (2), **caractérisé en ce que** la couche isolante textile (2) est assemblée avec la couche de protection (3) par au moins une liaison de rivetage-poinçonnage en formant un composite (10).

10. Élément de protection selon la revendication 9, **caractérisé en ce que** la couche isolante textile (2) est un non-tissé en LWRT constitué d'un mélange de fibres thermoplastiques et de fibres de verre.

11. Élément de protection selon l'une des revendications 9 ou 10, **caractérisé en ce que** la couche de protection (3) est une tôle en acier inoxydable ou en acier ou en aluminium qui présente une épaisseur comprise entre 0,2 mm et 0,7 mm, en particulier entre 0,2 mm et 0,4 mm.

12. Élément de protection selon l'une des revendications 9 ou 11, **caractérisé en ce qu'**une tête d'un rivet poinçonnant (6) est agencé sur une seconde face (5) de la couche isolante textile (2) et un repli (8) de la liaison de rivetage-poinçonnage est agencé sur une première face (4) de la couche de protection métallique (3) du composite (10).

13. Élément de protection selon l'une des revendications 9 ou 12, **caractérisé en ce que** ledit au moins un rivet poinçonnant (6) possède un diamètre (D) de tête de rivet poinçonnant qui est supérieur au double du diamètre de tige (d), en particulier supérieur à 2,5 fois le diamètre de tige (d).

14. Élément de protection selon l'une des revendications 9 ou 13, **caractérisé en ce que** la couche isolante textile est une feuille multicouche comportant une couche en fibres de verre et en fibres PP ou PU thermo-activables, ou la couche isolante textile est une pièce formée autoporteuse, en particulier de forme rigide en soi, sur laquelle au moins une couche de protection est montée seulement localement.
